# EUROPÄISCHE PATENTANMELDUNG

(11) **EP 0 600 386 A1**
(43) Veröffentlichungstag der Anmeldung: **08.06.1994**
(21) Anmeldenummer: 93119077.1
(22) Anmeldetag: 26.11.1993
(51) Int. Cl.: F27B 9/20, F27B 9/26

(54) **Hubtunnelofen**

(30) Priorität: 30.11.1992 DE 4240151
(71) Anmelder: Strohmenger, Werner, D-8524 Neunkirchen a.Br. (DE)
(72) Erfinder: Strohmenger, Werner, D-8524 Neunkirchen a.Br. (DE)
(74) Vertreter: Christ, Dieter, Dipl.-Ing.

(57) **Zusammenfassung**

Die Erfindung betrifft einen Tunnelofen zum Brennen von keramischem Gut, bei dem die Auflage für das Gut aus einzelnen Balken (3, 4) besteht, die synchron anhebbar und in Ofenlängsrichtung (16) verschiebbar sind.

## Beschreibung

Tunnelöfen sind in den verschiedensten Ausführungsformen bekannt, vgl. z.B. DE-OS 37 14 014, 30 26 640.

In den meisten Fällen wird das zu brennende Keramikgut auf Wagen durch den Ofen transportiert. Dies hat energetisch gesehen den Nachteil, daß die relativ große Masse der Wagen bei jedem Durchlauf aufs neue erwärmt werden muß. Ferner ist es nicht immer ganz einfach, die Transportwagen gegeneinander und insbesondere seitlich so abzudichten, daß nicht doch ein erheblicher Wärmeabfluß stattfindet.

Die Aufgabe der vorliegenden Erfindung besteht darin, einen Ofen zu schaffen, bei dem der spezifische Energieverbrauch gegenüber herkömmlichen Tunnelöfen erheblich gesenkt ist.

Diese Aufgabe wird mit einem Hubtunnelofen mit folgenden Merkmalen gelöst:
a) die Auflage für den zu brennenden Besatz besteht aus einzelnen, quer zur Ofenlängsrichtung liegenden Balken aus wärmefesten Material,
b) die Balken sind durch eine Hubvorrichtung insgesamt synchron anhebbar, in Ofenlängsrichtung verschiebbar und absetzbar und
c) die Hubvorrichtung fährt nach einem oder mehreren Verschiebeschritten in ihre Ausgangsposition zurück.

Auf diese Weise wird erheblich Energie gespart, da nur die relativ massearme Auflagefläche in Form der Balken wieder erwärmt werden muß.

Auch läßt sich der erfindungsgemäße Ofen besser seitlich abdichten, da nur die Auflagefläche bewegt wird. Eine hervorragende Abdichtung ergibt sich insbesondere durch die Verwendung von durchgehenden Wasserrinnen für Abdichtungsschürzen.

Je nach der Baubreite des Ofens kann es vorteilhaft sein, statt eines durchgehenden Balkens mehrere Balken zu nutzen und hierfür im Ofen entsprechende Auflagestützen vorzusehen.

Damit die Balken nicht unkontrolliert wandern können,ist es ferner von Vorteil, zumindest eine Gruppe von Balken über Abstandshalter miteinander fest zu verbinden. Diese Abstandshalter, die insbesondere in der Balkenauflagefläche liegen können, werden mit durch den Ofen transportiert und sind ebenfalls aus wärmebeständigem Material, z.B. Keramik, hergestellt.

Im Rahmen des vorstehend beschriebenen Ofenkonzeptes sind naturgemäß die bekannten Regel- und Steuerverfahren für Öfen einsetzbar.

Zusätzlich kann in einem solchen Ofen auch noch eine unzulässige seitliche Wanderung der Balken überwacht werden, z.B. mittels eines Ultraschallsensors. Bei unzulässigen Abweichungen kann ein Störsignal ausgegeben werden oder eine Korrektur durch die Hubvorrichtung vorgenommen werden.

Ist der Ofen in Querrichtung unterteilt, d.h. sind die Balken unterteilt, ist es auch möglich, den Ofen im GegenstromWärmetauscherprinzip zu bewegen, d.h. die beiden Hälften gegensinnig durch den Ofen wandern zu lassen (vgl. hierzu z.B. DE-OS 39 34 705).

Anhand eines in der Zeichnung dargestellten Ausführungsbeispiels sei die Erfindung näher erläutert; es zeigen:
- Fig. 1: einen Querschnitt durch den Ofen,
- Fig. 2: einen schematischen Längsschnitt durch den Ofen und
- Fig. 3: eine Draufsicht auf Abstandshalter für die Balken.

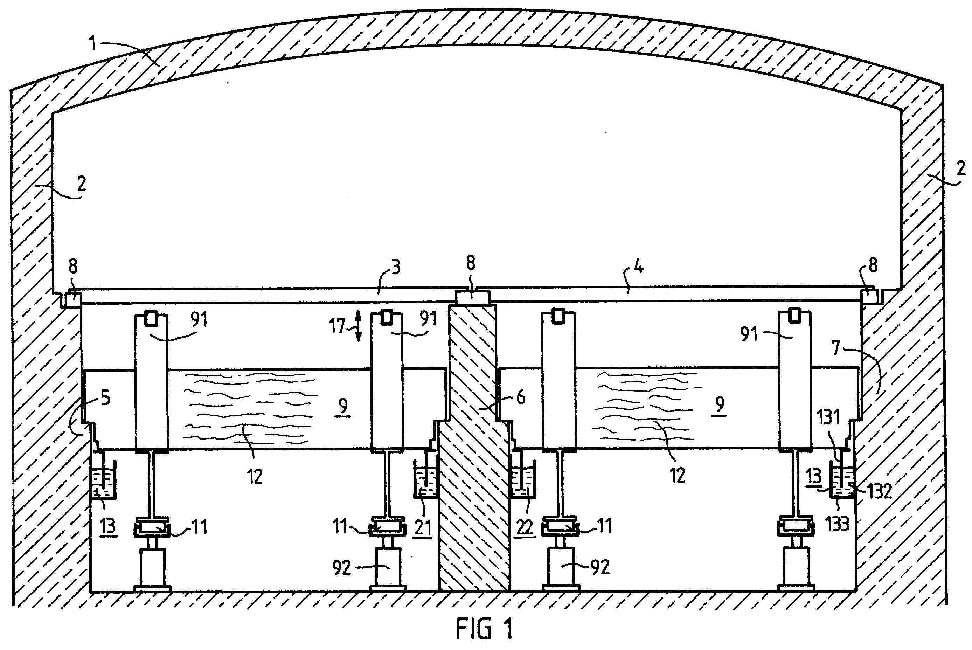

Wie aus Fig. 1 ersichtlich, wird der Ofenraum durch die Decke 1 und die seitlichen Wände 2 gebildet.

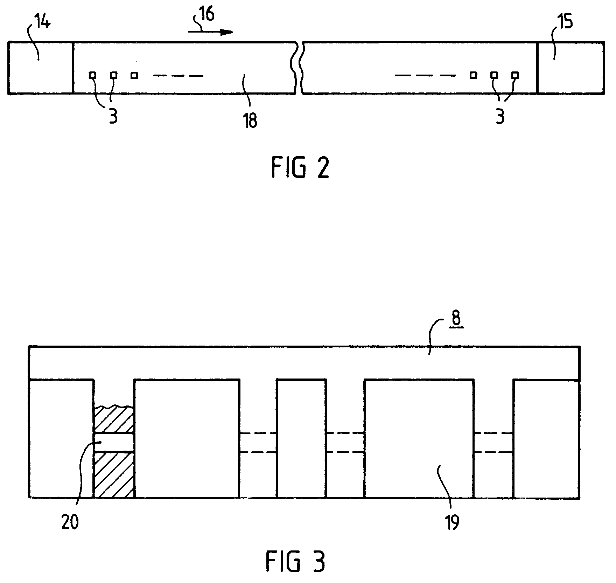

Die Auflagefläche für den nichtgezeigten, zu brennenden Besatz besteht aus einzelnen Balken 3, 4 aus Siliziumkarbid. Diese quer zur Ofenlängsrichtung liegenden Balken 3 und 4 liegen jeweils seitlich auf Stützen 5 und 7 und mittig auf Stützen 6 auf. Die Balken 3 bzw. 4 sind gruppenweise durch dicht aneinandergrenzende Auflagehalterungen 8 miteinander verbunden, wie in Fig. 3 näher dargestellt. Hierbei sind mit 19 die Ausnehmungen für die aufzunehmenden Balken 3, 4 und mit 20 die Bohrungen für die Aufnahme von Verschraubungen von Balken und Halterung 8 angedeutet.

Zum synchronen Anheben der Balken 3, 4 dient eine wärmeisolierte Hubvorrichtung 9 (Hubtisch) mit Trägern 91, die durch hydraulische Stempel 92 in Doppelpfeilrichtung 17 verschiebbar und durch Rollvorrichtungen 11 in Ofenlängsrichtung 16 verfahrbar sind.

Zum Transport des Besatzes durch den Ofen werden die Balken 3, 4 durch die Stempel 91 synchron in Doppelpfeilrichtung 17 angehoben und in Längsrichtung 16 des Ofens mittels Rollvorrichtungen 11 verfahren, und zwar bis zur nächsten Absetzstelle. Hier werden dann die Balken 3, 4 mit dem Besatz wieder abgesenkt und die Hubvorrichtung 9, d.h. die Träger 91, mittels der Rollvorrichtung 11 in ihre Ausgangslage zurückgefahren. Die Rollvorrichtung kann dabei z.B. aus Endlosrollketten bestehen, wie sie z.B. zum Transport von schweren Lasten benutzt werden.

Die Tragbalken 3, 4 bzw. der Besatz sind nach unten hin durch eine Isolation 12 in Form von Matten und Isolierwolle abgedichtet. Zur seitlichen Abdichtung sind rechts und links Wasserabdichtungen 13 vorgesehen, die in Ofenlängsrichtung durchgehend angeordnet sind und stirnseitig umgreifen, d.h. eine geschlossene Abdichtung bilden. Da in der gezeigten Ausführungsform zwei Balken in Ofenquerrichtung vorhanden sind, die mittig gestützt werden, ist naturgemäß auch hier für eine Abdichtung zwischen Stützpfeiler 6 und der Hubvorrichtung 9 samt Auflagefläche zu sorgen. Hierzu werden ebenfalls durchgehende Wasserabdichtungen 21 und 22 verwendet. Bei schmälerem Ofen kann ein durchgehender Balken verwendet werden.

Wie aus der schematischen Fig. 2 ersichtlich, sind am Ein- und Ausgang des eigentlichen Ofens 18 Schleusen 14 und 15 für Auflage bzw. Abnahme des Besatzes vorgesehen. Die den Ofen verlassenden Balken 3 bzw. 4 werden durch geeignete Vorrichtungen wieder zurückgeführt. Die Verbindung der einzelnen Balken 3 bzw. 4 jeweils miteinander kann z.B. paarweise erfolgen, so daß jeweils zwei Balkenpaare mit Besatz in den eigentlichen Ofenraum eintreten bzw. diesen verlassen. Die Schleusen 14, 15 haben den Vorteil, daß keine unkontrollierten Luftmengenströme stören und Energie verloren geht.

Die Wasserabdichtugen 13 bestehen aus dem an der Hubvorrichtung 9 befestigten Eintauchblechen 131 und den mit Wasser 132 gefüllten, feststehenden Trögen 133. Die Eintauchbleche 131 und die Tröge 133 sind auch jeweils stirnseitig vorgesehen.

Insgesamt ergibt sich eine sehr wirtschaftliche Ofenkonstruktion, bei der die heißen Brenngase in den Raum unterhalb der Balken 3, 4 eingeblasen werden, zwischen den hohlen Balken 3, 4 bzw. dem Brenngut hochströmen und das Brenngut gleichmäßig erwärmen.
Eine etwas abweichende Konstruktion mit gleicher Wirkungist dadurch gegeben, daß auf Schienen fahrende wärmeisolierende Wagengestelle vorgesehen werden, auf denen die Balken mit Abstand angeordnet sind. Die Hubbewegung kommt durch das Anheben der Schienen und die Längsbewegung durch das Längsverfahren der miteinander lösbar verbundenen Wagengestelle zustande, d.h., man hat eine Art verfahrbaren Hubtisch, der jedoch bei Störfällen getrennt werden kann. Die Brenngase werden auch hier in den Raum zwischen der Hubtischoberfläche und den Balken eingeblasen.

## Patentansprüche

1. Hubtunnelofen zum Brennen von keramischem Gut mit folgenden Merkmalen:
a) die Auflage für den zu brennenden Besatz besteht aus einzelnen, quer zur Ofenlängsrichtung liegenden Balken (3, 4) aus wärmefestem Material,
b) die Balken (3, 4) sind durch eine Hubvorrichtung (9) insgesamt synchron anhebbar, in Ofenlängsrichtung (16) verschiebbar und absetzbar,
c) die Balken (3, 4,) sind durch mittransportierbare Abstandshalter (8) in ihrer relativen Lage zueinander gehalten und
d) die Bewegung der Balken (3, 4) quer zur Ofenlängsrichtung (16) ist überwachbar und korrigierbar.

2. Hubtunnelofen nach Anspruch 1, bei dem die Hubvorrichtung (9) hydraulisch bewegbare Stempel (92) und Rollvorrichtungen (11) umfaßt.

3. Hubtunnelofen nach Anspruch 1, bei dem die Balken (3, 4) in Ofenquerrichtung unterteilt sind.

4. Hubtunnelofen nach Anspruch 1, bei dem seitliche Abdichtungen (13) zwischen Ofenseitenwand (2) und Hubvorrichtung (9) vorgesehen sind.

5. Hubtunnelofen nach Anspruch 4 mit - in Ofenrichtung gesehen - durchgehenden Wasserrinnen (132) und Eintauchblechen (131), die an den Stirnseiten des Ofens miteinander verbunden sind.

6. Hubtunnelofen nach Anspruch 1 mit Balken aus hochverdichtetem Siliziumkarbid.

7. Hubtunnelofen nach Anspruch 1 mit Schleusen (14, 15) am Ein- und Ausgang.

8. Hubtunnelofen nach Anspruch 1, bei dem die Balken (3, 4) auf einem Hubtisch angeordnet sind, der auf anhebbaren Schienen in Ofenlängsrichtung (16) fahrbar ist.

9. Hubtunnelofen nach Anspruch 8, bei dem der Hubtisch aus miteinander verbundenen Wagengestellen besteht.
